# EUROPÄISCHE PATENTANMELDUNG

(11) **EP 1 189 332 A2**
(43) Veröffentlichungstag der Anmeldung: **20.03.2002**
(21) Anmeldenummer: 01120391.6
(22) Anmeldetag: 25.08.2001
(51) Int. Cl.: H02K 41/06

(54) **Motor mit integriertem Wellgetriebe**

(30) Priorität: 30.08.2000 DE 10042398
(71) Anmelder: ROBERT BOSCH GMBH, 70442 Stuttgart (DE)
(72) Erfinder: Bolz, Martin-Peter, 77815 Buehl (DE)

(57) **Zusammenfassung**

Bei einem Motor mit integriertem Harmonicdrive-Getriebe, der ein feststehendes Außenelement (11) mit einer ringförmigen Innenverzahnung (12) und ein von dem Außenelement (11) umschlossenes, auf einer dazu koaxialen Abtriebswelle (15) drehfest sitzendes Innenelement (13) mit einer eine gegenüber der Innenverzahnung (12) wenig kleinere Zähnezahl besitzenden, kranzförmigen Außenverzahnung (14) aufweist, das flexibel ist und sich mit seiner Außenverzahnung (14) durch ovale Verformung auf der Innenverzahnung (12) abwälzt, ist zur Erzielung einer flachen Bauweise bei einem hohen Ausgangsmoment die ovale Verformung mittels mindestens eines am Außenelement (11) umlaufenden Magnetfelds bewirkt, das im Bereich der Verzahnungen (12, 14) eine auf aufeinanderfolgende Außenverzahnungsabschnitte (141) wirkende radial nach außen gerichtete Magnetkraft (16) erzeugt (Fig. 1).

## Beschreibung

### Stand der Technik

Die Erfindung betrifft einen Motor mit integriertem Harmonicdrive-Getriebe der im Oberbegriff des Anspruchs 1 definierten Gattung.

Bei vielen Anwendungen von Elektromotoren werden Antriebe mit hohen Momenten und relativ niedrigen Drehzahlen benötigt. Beispielsweise wird der Antrieb eines Scheibenwischers in einem Kraftfahrzeug mit maximal 65 min⁻¹ betrieben und gibt ein maximales Moment von ca. 35 Nm ab. Da man hohe Leistungsdichten nur aus Elektromotoren mit sehr viel höheren Drehzahlen erhält, werden Elektromotoren für Wischerantriebe mit einem Untersetzungsgetriebe ausgestattet. Elektromotoren mit Untersetzungsgetriebe haben den Nachteil, daß die Dynamik des Antriebs sinkt, da die Massenträgheit des Motorläufers mit dem Quadrat der Übersetzung auf den Ausgang des Antriebs wirkt.

Für miniaturisierte Antriebe, beispielsweise bei Kleinstrobotern, Pumpen oder optischen Systemen, ist es bereits bekannt, Motoren mit integriertem Harmonicdrive-Getriebe der eingangs genannten Art zu verwenden. Harmonicdrive-Getriebe, auch Wellgetriebe genannt, haben den Vorteil einer sehr hohen Untersetzung bei kompakter Bauweise. Bei einem solchen Harmonicdrive-Getriebe wird ein elastisch verformbares Element (Flexspline) mit einer Außenverzahnung in einer um wenige Zähne größere Innenverzahnung (Cirularspline) durch ovale Verformung abgewälzt. Bei jeder Umdrehung eines innen laufenden Verformungselements wird das verformbare Element (Flexspline) um den Betrag am Umfang weiter gedreht, der der Differenzzähnezahl mal Teilung am Umfang entspricht.

Bei einem bekannten, als Harmonic Piezodrive bezeichneten miniaturisierten Servoantrieb (VDI/Z Spezialantriebstechnik April 99, Seite 15, Oliver Barth: "Harmonic Piezodrive, ein miniaturisierbarer Servoantrieb") wird das elastisch verformbare Element (Flexspline) durch radial um die Getriebeachse angeordnete Piezoaktoren, die phasenverschoben angesteuert werden, oval verformt.

### Vorteile der Erfindung

Der erfindungsgemäße Motor mit integriertem Harmonicdrive-Getriebe hat den Vorteil einer kompakten, flachen Bauweise mit sehr hohem Abtriebsmoment und extremer Dynamik. Da in ihm nur das Magnetfeld und keine große Masse mit hoher Drehzahl umläuft, ist er hochdynamisch und erzeugt ein hohes Drehmoment bei niedrigen Drehzahlen. Der Motor ist einfach aus wenigen sich wiederholenden Teilen aufgebaut und leicht zu montieren. Wegen seiner flachen Bauweise und seiner hohen Ausgangsmomente ist er als Stellmotor, insbesondere in Kraftfahrzeugen, für beliebige Stellaufgaben geeignet. So kann er z.B. als Wählmotor oder Schaltmotor in Automatik-Schaltgetrieben mit seinem schnelle Hochlauf die Schaltzeiten erheblich verkürzen. Bei Verwendung in Fensterhebern oder Schiebedächern kann er beim Erkennen eines Klemmfalls nahezu verzögerungsfrei stillgesetzt werden.

Durch die in den weiteren Ansprüchen aufgeführten Maßnahmen sind vorteilhafte Weiterbildungen und Verbesserungen des im Anspruch 1 angegebenen Motors möglich.

Gemäß einer vorteilhaften Ausführungsform der Erfindung weist das Außenelement eine Mehrzahl von auf einem zur Abtriebswelle koaxialen Teilerkreis äquidistant angeordneten Elektromagneten auf, wobei jeder Elektromagnet ein U-förmiges Joch mit zwei radial sich erstreckenden Jochschenkeln und einem diese verbindenden, axial ausgerichteten Jochsteg aufweist. An mindestens einer der dem Innenelement zugekehrten Polflächen an den freien Stirnenden der Jochschenkeln ist ein Außenverzahnungsabschnitt angeordnet. Vorzugsweise ist dabei das Joch lamelliert, und jede aus keilförmig gewalztem Blechband hergestellte Jochlamelle weist einen einstückig angeformten Zahn der Innenverzahnung auf. Die Dicke der Lamellen ist durch die Zahnteilung der Innenverzahnung gegeben.

Gemäß einer vorteilhaften Ausführungsform der Erfindung weist das Innenelement Glockenform auf, wobei der Glockenmantel so geschlitzt ist, daß der Glockenmantel aus einer Vielzahl von flexiblen Glockenzungen besteht. Am freien Ende der Glockenzungen ist die Außenverzahnung angeordnet, die vorzugsweise auf einem flexiblen Ring ausgebildet ist, der die freien Enden der Glockenzungen auf deren dem Außenelement zugekehrten Außenfläche umschließt. Während die Glocke aus einem Material mit guten magnetischen Eigenschaften hergestellt ist, ist der flexible Ring aus Federstahl gefertigt und ist somit verschleißbeständiger als magnetisch bessere Materialien.

Gemäß einer alternativen Ausführungsform der Erfindung ist das Innenelement mit Außenverzahnung aus einer Vielzahl von radial ausgerichteten Segmenten zusammengesetzt, die durch mindestens einen Federring in Radialrichtung verschiebbar gehalten sind, wobei jedes Segment einen vorzugsweise einstückig angeformten Zahn der Außenverzahnung trägt. Die Dicke der Segmente ist dabei wiederum durch die Zahnteilung der Außenverzahnung festgelegt. In einer fertigungstechnisch günstigen konstruktiven Ausführungsform sind die Segmente in mindestens einem drehfest mit der Abtriebswelle verbundenen zylinderförmigen Mitnehmer gehalten, der die Segmente in Radialschlitzen längsverschieblich aufnimmt.

Gemäß einer bevorzugten Ausführungsform der Erfindung sind auf der Abtriebswelle zwei Mitnehmer im Axialabstand voneinander angeordnet, und in Umfangsrichtung aufeinanderfolgende Segmente mit jeweils zwei axial voneinander beabstandeten Zähnen sind um jeweils 180° gedreht abwechselnd in den einen und anderen Mitnehmer eingesetzt. Die Joche der Elektromagnete tragen an beiden Polflächen der Jochschenkel einen Innenverzahnungsabschnitt einer von zwei im Axialabstand voneinander angeordneten, kranzförmigen Innenverzahnungen. Durch die Aufteilung der Segmente auf zwei gemeinsam auf der Abtriebswelle sitzenden Mitnehmer läßt sich eine wesentlich kleinere Zahnteilung und damit eine größere Zähnezahl der Innenverzahnung realisieren.

### Zeichnung

Die Erfindung ist anhand von der Zeichnung dargestellten Ausführungsbeispielen in der nachfolgenden Beschreibung näher erläutert. Es zeigen jeweils in schematischer Darstellung:
- Fig. 1: einen Halbschnitt eines Harmonic-Magnetmotors gemäß Linie I - I in Fig. 2,
- Fig. 2: eine Ansicht des Motors in Richtung II in Fig. 1,
- Fig. 3: eine perspektivische Darstellung der Ansicht des Motors gemäß Fig. 2 mit abgenommenem Außenverzahnungsring,
- Fig. 4: eine perspektivische Ansicht eines Harmonic-Magnetmotors gemäß einem weiteren Ausführungsbeispiel mit einigen nach Art einer Explosionsdarstellung herausgezogenen Bauteilen,
- Fig. 5: eine Draufsicht des Motors in Richtung Pfeil V in Fig. 4,
- Fig. 6: einen Schnitt längs der Linie VI -VI in Fig. 5.

### Beschreibung der Ausführungsbeispiele

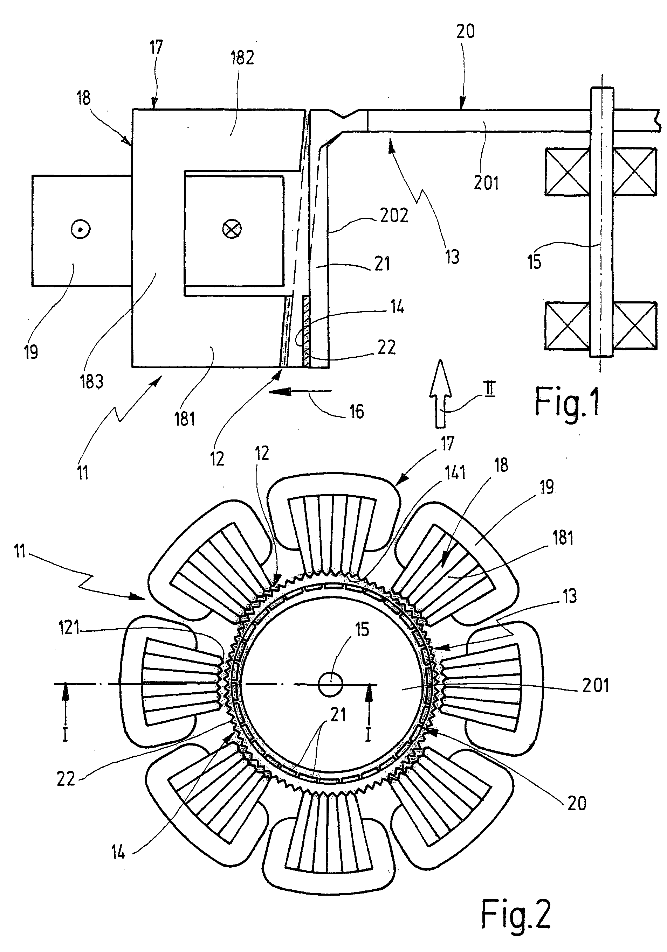

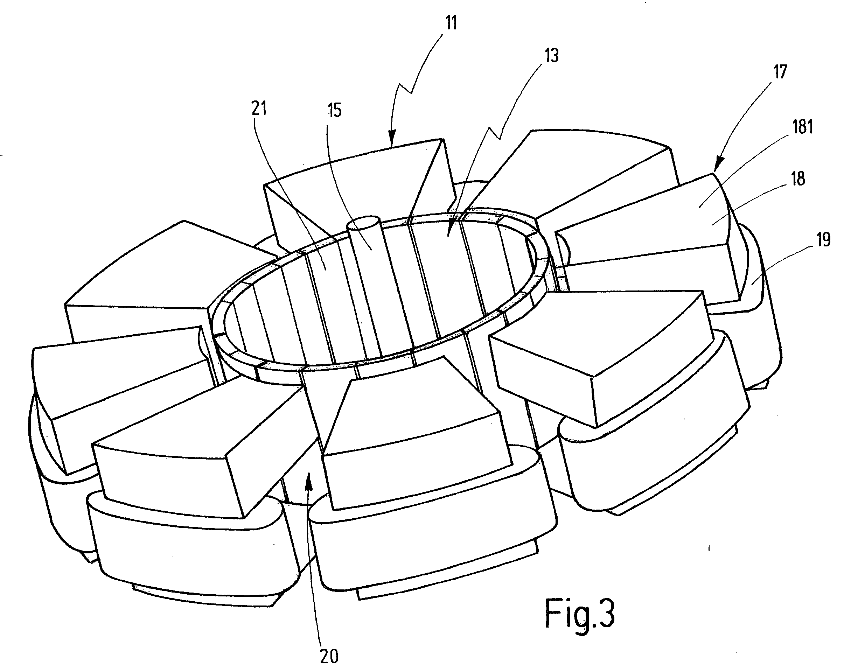

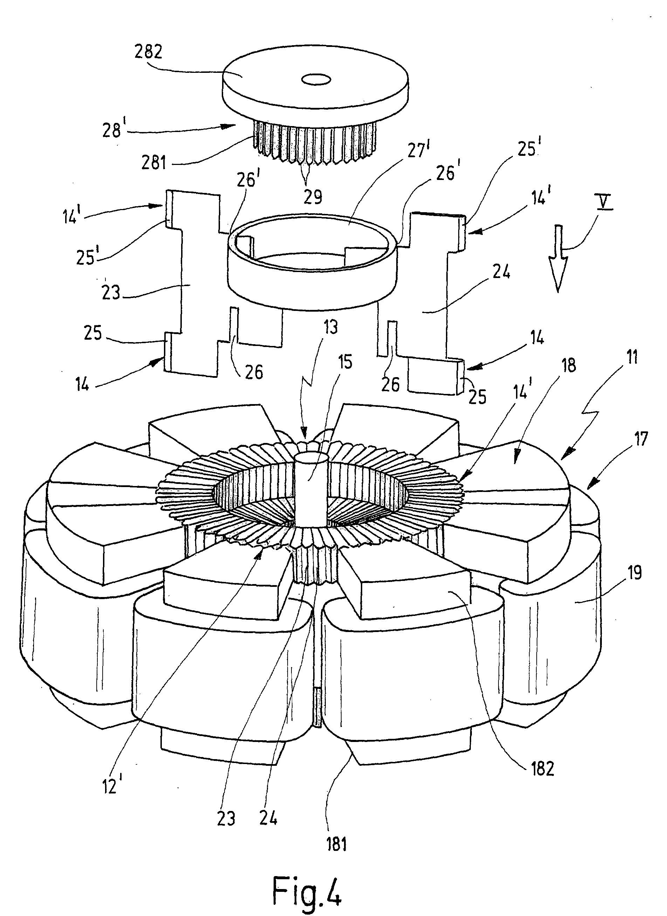

Der in der Zeichnung in zwei verschiedenen Ausführungsbeispielen dargestellte elektrische Motor mit integriertem Harmonicdrive-Getriebe, im folgenden Harmonic-Magnetmotor genannt, besitzt ein feststehendes Außenelement 11 mit in Fig. 1 - 3 einer ringförmigen Innenverzahnung 12 und in Fig. 4 - 6 zwei voneinander axial beabstandeten Innenverzahnungen 12, 12' sowie ein von dem Außenelement 11 konzentrisch umschlossenes Innenelement 13 mit in Fig. 1 - 3 einer Außenverzahnung 14 und in Fig. 4 - 6 zwei voneinander axial beabstandeten Außenverzahnungen 14, 14', deren auf den vollen Umfang bezogene Zähnezahl um mindestens zwei Zähne kleiner ist als die Zähnezahl der Innenverzahnung 12 bzw. 12'. Die Teilung von Innen- und Außenverzahnung ist gleich. Das Innenelement 13 sitzt drehfest auf einer koaxialen Abtriebswelle 15 und ist im Bereich seiner kranzförmigen Außenverzahnung 14, 14' flexibel ausgebildet, so daß die Außenverzahnung 14, 14' oval verformbar ist und dadurch mit aufeinanderfolgenden Verzahnungsabschnitten in die Innenverzahnung 12, 12' eingreifen kann, wobei sich das Innenelement 13 insgesamt durch ovale Verformung auf der Innenverzahnung 12, 12' abwälzt. Die ovale Verformung wird dabei mittels mindestens eines am Außenelement 11 umlaufenden Magnetfelds bewirkt, das im Bereich der Verzahnungen 12, 14 bzw. 12', 14' eine auf einen Außenverzahnungsabschnitt 141 wirkende, radial nach außen gerichtete Magnetkraft (Pfeil 16 in Fig. 1) erzeugt. In den dargestellten Ausführungsbeispielen sind zwei diametral am Außenelement 11 angeordnete Magnetfelder vorhanden, die synchron umlaufen, so daß jeweils einander diametral gegenüberliegende Außenverzahnungsabschnitte 141 bzw. 141' in zwei mit geringem Spaltabstand gegenüberliegende Innenverzahnungsabschnitte 121 bzw. 121' hineingezogen werden und dadurch das Innenelement 13 bei umlaufenden Magnetfeldern nach dem Reluktanzprinzip gedreht wird. Aufgrund der sich nur gering unterscheidenden Zähnezahl der geringfügig mehr Zähne aufweisenden Innenverzahnung 12, 12' und der Außenverzahnung 14, 14' läuft bei hoher Drehzahl des Magnetfelds die mit dem Innenelement 13 drehfest verbundene Abtriebswelle 15 mit nur geringer Drehzahl um, so daß eine sehr große Untersetzung realisiert werden kann. Das dabei vom Motor erzeugte Drehmoment hängt wesentlich vom Winkel der gewählten Verzahnungen 12, 14 bzw. 12', 14' ab.

Bei beiden Ausführungsformen des Harmonic-Magnetmotors weist das Außenelement 11 eine Mehrzahl von Elektromagneten 17 auf, die auf einem zur Abtriebswelle 15 koaxialen Teilerkreis äquidistant angeordnet sind. Die Zahl der Elektromagnete 17 ist vorzugsweise größer als sechs, soll aber nicht zu groß gewählt werden, da mit ihr der Aufwand für die Elektronik steigt. Eine große Anzahl von Elektromagneten 17 führt zu einem gleichmäßigeren Verlauf der Abwälzung der Außenverzahnung 14, 14' des Innenelements 13 auf der Innenverzahnung 12, 12' am Außenelement 11. Jeder Elektromagnet 17 weist ein U-förmiges Joch 18 mit zwei Jochschenkeln 181, 182 und einem die Jochschenkel 181, 182 miteinander verbindenden Jochsteg 183 auf. Die Joche 18 sind so angeordnet, daß die Jochschenkel 181, 182 radial ausgerichtet sind und der Jochsteg 183 sich in Axialrichtung erstreckt. Auf jedem Jochsteg 183, ist eine Magnetspule 19 angeordnet. Die Innenverzahnung 12 bzw. 12' des Außenelements 11 ist in den Ausführungsbeispielen auf acht Elektromagnete 17 aufgeteilt, wobei jeweils ein Innenverzahnungsabschnitt 121, 121' einem Elektromagneten 17 zugeordnet ist und auf den von den freien Stirnseiten der Jochschenkel 181, 182 gebildeten Polflächen, die dem Innenelement 13 zugekehrt sind, angeordnet sind. Die Joche 18 sind lamelliert aus keilförmig gewalztem Blechband hergestellt, und jede Jochlamelle trägt einen Zahn der Innenverzahnung 12 bzw. zwei Zähne der Innenverzahnung 12', der einstückig angeformt ist bzw. die einstückig angeformt sind. Die Jochlamellen sind aus keilförmig gewalztem Blechband hergestellt, und ihre Dicke richtet sich nach der Zahnteilung der Innenverzahnung 12.

Im Ausführungsbeispiel des Harmonic-Magnetmotors in Fig. 1 - 3 sind jeweils nur am unteren Jochschenkel 181 der Elektromagnete 17 Innenverzahnungsabschnitte 121 angeordnet, die sich in ihrer Gesamtheit zu einem koaxialen Zahnkranz mit dazwischenliegenden zahnfreien Abschnitten ergänzen. Im Ausführungsbeispiel des Harmonic-Magnetmotors gemäß Fig. 4 - 6 tragen sowohl die Jochschenkel 181 als auch die Jochschenkel 182 auf ihren Polflächen Innenverzahnungsabschnitte 121 bzw. 121', die sich jeweils in gleicher Weise zu einem Zahnkranz mit dazwischenliegenden zahnlosen Abschnitten ergänzen.

Das Innenelement 13 ist in dem Ausführungsbeispiel des Harmonic-Magnetmotors gemäß Fig. 1 - 3 als Glocke 20 mit Glockenboden 201 und Glockenmantel 202 ausgebildet, wobei der Glockenmantel 202 vom Glockenrand aus bis zum Glockenboden 201 geschlitzt ist, so daß sich eine Vielzahl von in Umfangsrichtung nebeneinanderliegenden flexiblen Glockenzungen 21 ergibt (Fig. 2). Die Glocke 20 ist aus ferromagnetischem Material hergestellt. Die freien Enden der Glockenzungen 21 werden auf ihrer dem Außenelement 11 zugekehrten Außenfläche von einem flexiblen Ring 22 umschlossen, der die Außenverzahnung 14 trägt. Der flexible Ring 22 mit Außenverzahnung 14 ist aus Federstahl hergestellt.

Die Wirkungsweise des Hamonic-Magnetmotors gemäß Fig. 1 - 3 ist wie folgt:

Werden die beiden diametral gegenüberliegenden Elektromagnete 17 erregt, wie dies durch die in die Magnetspule 19 in Fig. 1 eingezeichneten Stromrichtungen angedeutet ist, so wird infolge des Magnetflusses im Joch 18, der sich über die Glockenzungen 21 schließt, eine Magnetkraft (Pfeil 16 in Fig. 1) zwischen dem freien Ende der Glockenzungen 21 und der Polfläche des unteren Jochschenkels 181 erzeugt, so daß die im Bereich des unteren Jochschenkels 181 liegenden Glockenzungen 21 nach außen schwenken und dabei den flexiblen Ring 22 oval verformen. Die Verformung des Rings 22 ist in Fig. 2 dargestellt. Dabei werden die Außenverzahnungsabschnitt 141 des flexiblen Rings 22 in die Innenverzahnungsabschnitte 121 am Jochschenkel 181 hineingedrückt. Wegen der unterschiedlichen Zähnezahl der Verzahnungsabschnitte 141, 121 dreht sich das Innenelement 13 um einen Bruchteil der Zahnteilung der Außenverzahnung 141 weiter. Nunmehr werden die beiden in Drehrichtung des Innenelements 13 folgenden, diametral gegenüberliegenden Elektromagnete 17 bestromt, wodurch sich der gleiche Vorgang abspielt, so daß sich insgesamt mit aufeinanderfolgender Bestromung der Elektromagnete 17, die von den diametralen Elektromagneten 17 jeweils erzeugten Magnetfelder sich drehen und dadurch das Innenelement 13 in eine Drehung versetzt wird, die gegenüber der Drehung des Magnetfelds sehr stark untersetzt ist.

In dem Ausführungsbeispiel des Harmonic-Magnetmotors gemäß Fig. 4 - 6 ist das Innenelement 13 aus einer Vielzahl von radial ausgerichteten Segmenten 23, 24 zusammengesetzt, die ringartig hintereinander gereiht sind, wobei sich in Umfangsrichtung immer ein Segment 23 mit einem Segment 24 abwechselt. Beide Segmente 23, 24 sind identisch ausgebildet und um 180° gegeneinander verdreht angeordnet. Jedes Segment trägt an seiner Außenseite zwei axial beabstandete Zähne 25 bzw. 25' und nahe seiner Innenkante zwei Axialschlitze 26, 26', die in Achsrichtung miteinander fluchten und von voneinander abgekehrten Stirnseiten der Segmente 23, 24 her eingebracht sind. Die Axialschlitze 26, 26' dienen zum Einlegen von zwei Federringen 27, 27'. Die Zahnsegmente 23, 24 sind aus ferromagnetischem Material hergestellt, und zwar aus profilgewalzten Blechstreifen, deren Dicke durch die Zahnteilung der Außenverzahnung 14 des Innenelements 13 bestimmt ist. Der Zahnwinkel der Zähne 25, 25' bestimmt das an der Abtriebswelle 15 abnehmbare Drehmoment.

Die Segmente 23, 24 sind in zwei Mitnehmern 28, 28' aufgenommen, die im Axialabstand voneinander drehfest auf der Abtriebswelle 15 sitzen. Jeder Mitnehmer 28, 28' weist eine der halben Anzahl der Segmente 23, 24 entsprechende Zahl von Radialschlitzen 29 auf, die wenig breiter als die Dicke der Segmente 23, 24 ausgeführt sind. Die Segmente 23 werden in die Radialschlitze 29 des Mitnehmers 28 und die Segmente 24 in die Radialschlitze 29 des Mitnehmers 28' eingesetzt. Dabei bleiben die Segmente 23, 24 in ihrem jeweiligen Radialschlitz 29 radial verschiebbar. Gleichzeitig wird der Federring 27 in die Axialschlitze 26 und der Federring 27' in die Axialschlitze 26' der Segmente 23 und 24 eingelegt. Die beiden Federringe 27, 27' erzeugen bei einer Verschiebung der Segmente 23, 24 in Radialrichtung nach außen eine Rückstellkraft, so daß bei unerregten Elektromagneten 17 alle Segmente 23, 24 innerhalb eines Kreises liegen, dessen Kreisbogen an den Zahnspitzen der Außenverzahnung 14 bzw. 14' verläuft.

Das Außenelement 11 trägt - wie vorstehend bereits erwähnt - zwei im gleichen Abstand wie die Außenverzahnungen 14, 14' des Innenelements 13 angeordnete Innenverzahnungen 12, 12', von denen die Innenverzahnung 12 wiederum aus Innenverzahnungsabschnitten 121 zusammengesetzt ist, die auf den Polflächen der Jochschenkel 181 der Elektromagneten 17 ausgebildet sind, und die Innenverzahnung 12' aus Innenverzahnungsabschnitten 121' zusammengesetzt ist, die auf den Polflächen der Jochschenkel 182 ausgebildet sind. Die Innenverzahnungen 12 und 12' weisen gleiche Zähnezahl auf, die in gleicher Weise wie in Fig. 1- 3 etwas, d.h. mindestens um zwei Zähne, größer ist als die Zähnezahl der ebenfalls identisch ausgebildeten Außenverzahnungen 14 und 14'. Durch die Aufteilung der Segmente 23, 24 auf zwei Mitnehmer 28, 28' kann trotz des relativ kleinen Durchmessers der Mitnehmer 28, 28' eine große Anzahl von in Umfangsrichtung aufeinanderfolgenden Segmenten 23, 24 vorgesehen werden, ohne daß dies konstruktive Schwierigkeiten bei der Ausbildung der Radialschlitze 29 in den Mitnehmern 28, 28' mit sich bringt. Jeder Mitnehmer 28, 28' weist einen zylinderförmigen Teil 281 bzw. 281' und einen Flanschteil 282 und 282' auf, wobei die Radialschlitze 29 in den Zylinderteil 281 bzw. 281' eingebracht sind, während das Flanschteil 282 bzw. 282' die Segmente 23, 24 in Radialrichtung übergreift, so daß die Segmente 23, 24 in Achsrichtung im wesentlichen unverschiebbar zwischen den Flanschteilen 282 und 282' der Mitnehmer 28, 28' gehalten sind.

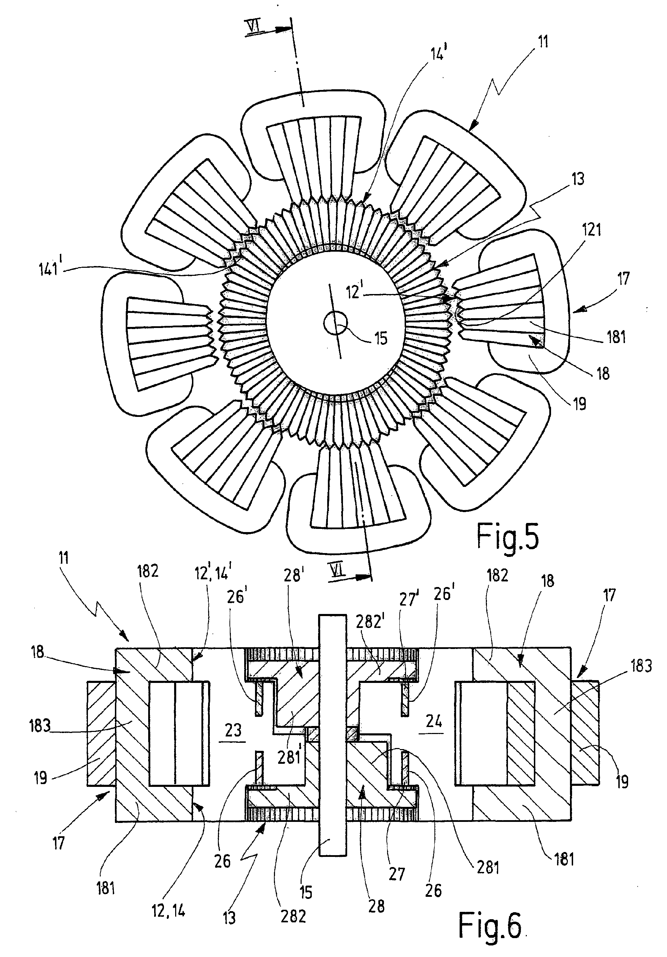

Die Wirkungsweise des vorstehend beschriebenen Harmonic-Magnetmotor ist im wesentlichen die gleiche wie sie zu dem Ausführungsbeispiel gemäß Fig. 1 - 3 beschrieben ist. Bei Bestromung von zwei diametral gegenüberliegenden Elektromagneten 17 werden die in dem Bereich der Innenverzahnungsabschnitte 121 der Joche 18 liegenden Segmente 23, 24 gegen die Rückstellkraft der beiden Federringe 27, 27' nach außen gezogen, wie dies in Fig. 5 schematisch dargestellt ist. Dadurch werden Außenverzahnungsabschnitte 141 und 141' in die Innenverzahnungsabschnitte 121 und 121' hineingezogen und das Innenelement 13 um einen Bruchteil der Zahnteilung der Außenverzahnung 14 bzw. 14' gedreht. Bei zeitlich nacheinander erfolgender Bestromung der aufeinanderfolgenden Elektromagnete 17 wird das Innenelement 13 gedreht und an der Abtriebswelle 15 ist ein Drehmoment abnehmbar.

Die Erfindung ist nicht auf die beschriebenen Ausführungsbeispiel beschränkt. So kann bei entsprechendem Zugeständnis an die Baugröße der Harmonic-Magnetmotor gemäß dem Ausführungsbeispiel der Fig. 4 - 6 auch nur mit einer Innen- und einer Außenverzahnung ausgeführt werden. In diesem Fall sind alle Segmente in einem einzigen Mitnehmer aufgenommen und tragen an ihrer Außenkante auch nur einen Zahn der Außenverzahnung. Das Außenelement wird dann wie in dem Ausführungsbeispiel der Fig. 1 - 3 ausgeführt, also mit nur einer Innenverzahnung versehen.

## Patentansprüche

1. Motor mit integriertem Harmonicdrive-Getriebe, der ein feststehendes Außenelement (11) mit mindestens einer ringförmigen Innenverzahnung (12) und ein von dem Äußenelement (11) umschlossenes, auf einer dazu koaxialen Abtriebswelle (15) drehfest sitzendes Innenelement (13) mit mindestens einer eine gegenüber der Innenverzahnung (12) wenig kleinere Zähnezahl besitzenden Außenverzahnung (14) aufweist, das mindestens im Bereich seiner Außenverzahnung (14) flexibel ausgebildet ist und sich mit seiner Außenverzahnung (14) durch ovale Verformung auf der Innenverzahnung (12) abwälzt, **dadurch gekennzeichnet, daß** die ovale Verformung mittels mindestens eines am Außenelement (11) umlaufenden Magnetfelds bewirkt ist, das im Bereich der Verzahnungen (12, 14) eine nacheinander auf aufeinanderfolgende Außenverzahnungsabschnitte (141) der Außenverzahnung (14) wirkende, radial nach außen gerichtete Magnetkraft erzeugt.

2. Motor nach Anspruch 1, **dadurch gekennzeichnet, daß** zwei diametral am Außenelement (11) angeordnete Magnetfelder vorhanden sind, die synchron umlaufen.

3. Motor nach Anspruch 1 oder 2, **dadurch gekennzeichnet, daß** das Außenelement (11) eine Mehrzahl von auf einem zur Abtriebswelle (15) koaxialen Teilerkreis äquidistant angeordneten Elektromagneten (17) aufweist, daß jeder Elektromagnet (17) ein U-förmiges Joch (18) mit zwei radial sich erstreckenden Jochschenkeln (181, 182) und einem diese miteinander verbindenden Jochsteg (183) aufweist und daß an mindestens einer der dem Innenelement (13) zugekehrten stirnseitigen Polflächen der Jochschenkel (181, 182) ein Innenverzahnungsabschnitt (121) angeordnet ist.

4. Motor nach Anspruch 3, **dadurch gekennzeichnet, daß** das Joch (18) lamelliert ist und jede Jochlamelle einen einstückig angeformten Zahn der Innenverzahnung (12) aufweist.

5. Motor nach Anspruch 4, **dadurch gekennzeichnet, daß** die Jochlamellen aus keilförmig gewalztem Blechband mit einer durch die Zahnteilung der Innenverzahnung (12) bestimmten Dicke hergestellt ist.

6. Motor nach einem der Ansprüche 3 - 5, **dadurch gekennzeichnet, daß** das Innenelement (13) Glockenform aufweist, daß der Glockenmantel (202), vorzugsweise bis zum Glockenboden (201), geschlitzt ist und daß an den freien Enden von durch die Schlitzung gebildeten Glockenzungen (21) die Außenverzahnung (11) angeordnet ist.

7. Motor nach Anspruch 6, **dadurch gekennzeichnet, daß** das glockenförmige Innenelement (13) aus ferromagnetischem Material hergestellt ist.

8. Motor nach Anspruch 6 oder 7, **dadurch gekennzeichnet, daß** die Außenverzahnung (14) auf einem flexiblen Ring (22) ausgebildet ist, der die freien Enden der Glockenzungen (21) auf deren dem Außenelement (11) zugekehrten Außenfläche umschließt.

9. Motor nach Anspruch 8, **dadurch gekennzeichnet, daß** der Ring (22) aus Federstahl hergestellt ist.

10. Motor nach einem der Ansprüche 3 - 5, **dadurch gekennzeichnet, daß** das Innenelement (13) aus einer Vielzahl von radial ausgerichteten ringartig hintereinander gereihten Segmenten (23, 24) zusammengesetzt ist, die durch mindestens einen Federring (27, 27') in Radialrichtung verschiebbar gehalten sind und daß jedes Segment (23, 24) mindestens einen vorzugsweise einstückig angeformten Zahn (25, 25') der Außenverzahnung (14, 14') aufweist.

11. Motor nach Anspruch 10, **dadurch gekennzeichnet, daß** die Dicke der Segmente (23, 24) durch die Zahnteilung der Außenverzahnung (14, 14') festgelegt ist.

12. Motor nach Anspruch 10 oder 11, **dadurch gekennzeichnet, daß** die Segmente (23, 24) in mindestens einem drehfest mit der Abtriebswelle (15) verbundenen zylindrischen Mitnehmer (28, 28') gehalten sind, der die Segmente (23, 24) in Radialschlitzen längsverschiebbar aufnimmt.

13. Motor nach Anspruch 12, **dadurch gekennzeichnet, daß** die Segmente (23, 24) mindestens einen Axialschlitz (26, 26') aufweisen, in die der mindestens eine Federring (27, 27') zur Rückstellung der radial verschieblichen Segmente (23, 24) einliegt.

14. Motor nach einem der Ansprüche 10 - 13, **dadurch gekennzeichnet, daß** die Segmente (23, 24) aus ferromagnetischem Material hergestellt sind.

15. Motor nach einem der Ansprüche 10 - 14, **dadurch gekennzeichnet, daß** jedes Segment (23, 24) zwei axial voneinander beabstandete Zähne einer unteren und einer oberen Außenverzahnung (14, 14') trägt, daß auf der Abtriebswelle (15) zwei Mitnehmer (28, 28') drehfest sitzen, daß in Umfangsrichtung der Mitnehmer (28, 28') aufeinanderfolgende Segmente (23, 24) um jeweils 180° gedreht abwechselnd in den einen und anderen Mitnehmer (28, 28') eingesetzt sind und daß die Joche (18) der Elektromagneten (17) an den Polflächen beider Jochschenkel (181, 182) einen Innenverzahnungsabschnitt (121, 121') einer von zwei in Axialabstand voneinander angeordneten Innenverzahnungen (12, 12') trägt.
